Europäisches Patentamt

European Patent Office

Office européen des brevets

(11) Numéro de publication: **0 366 063**
**A1**

## (12) DEMANDE DE BREVET EUROPEEN

(21) Numéro de dépôt: **89119713.9**

(51) Int. Cl.5: **H02H 1/06**

(22) Date de dépôt: **24.10.89**

(30) Priorité: **27.10.88 FR 8814028**

(43) Date de publication de la demande:
**02.05.90 Bulletin 90/18**

(84) Etats contractants désignés:
**CH DE ES FR GB IT LI SE**

(71) Demandeur: **GEC ALSTHOM SA**
**38, avenue Kléber**
**F-75116 Paris(FR)**

(72) Inventeur: **Ebersohl, Gérard**
**282, Chemin de Fontanières**
**F-69350 La Mulatière(FR)**

(74) Mandataire: **Weinmiller, Jürgen et al**
**Lennéstrasse 9 Postfach 24**
**D-8133 Feldafing(DE)**

(54) **Dispositif pour l'alimentation électrique d'un poste de protection d'une ligne triphasée.**

(57) L'invention est relative à un dispositif pour l'alimentation électrique d'un poste de protection d'une ligne triphasée.

Elle a pour objet un dispositif pour l'alimentation électrique d'un poste de protection d'une ligne triphasée à neutre à la terre par une résistance, caractérisé en ce qu'il comprend, en série entre l'une (3) des phases et la terre, un condensateur (5) et le primaire (6) d'un transformateur de courant ayant un secondaire (7), ledit secondaire étant, connecté à une alimentation à découpage (14).

Application à la protection des réseaux électriques.

FIG.1

EP 0 366 063 A1

## Dispositif pour l'alimentation électrique d'un poste de protection d'une ligne triphasée

La présente invention concerne un dispositif pour l'alimentation électrique d'un poste de protection d'une ligne triphasée.

Dans les réseaux de distribution de l'électricité, des équipements de protection sont associés aux embranchements du réseau, soit en aval, côté départ, soit en amont, côtée arrivée, afin de vérifier que le courant, sur chaque conducteur de la branche protégée ne dépasse pas une valeur prédéterminée.

De tels équipements de protection comprennent, d'une manière générale, un dispositif de mesure au moins évaluant un courant à surveiller. En cas de dépassement, ce dispositif de mesure agit électriquement sur un dispositif de déclenchement, lequel provoque, par une action mécanique, le déclenchement d'un disjoncteur qui coupe le départ ou l'arrivée en cause. Le dispositif de mesure constate alors la disparition du courant excessif.

Le dispositif de déclenchement et le disjoncteur sont des organes qui accumulent de l'énergie mécanique libérée au moment du déclenchement. Ils sont réarmés au moyen d'organes moteurs nécessitant une énergie relativement importante.

Usuellement, après un déclenchement, un automatisme de commande du disjoncteur opère un réarmement immédiat, puis un ou plusieurs réarmements différés, afin s'essayer de rétablir le circuit, car la cause du déclenchement peut avoir disparu (coup de foudre ou chute de branche d'arbre, par exemple).

L'équipement de protection est actuellement un appareil électronique (dispositif de mesure, notamment) et électrique (dispositif de déclenchement et organes de réarmement, en particulier). Il nécessite une source de courant d'alimentation. Cette source peut être constituée par une ou plusieurs batteries.

Ce choix présente des inconvénients car il entraîne la nécessité d'effectuer une surveillance de l'état des batteries et, à intervalles de temps plus ou moins longs, le rechargement des batteries, voire le remplacement de celles-ci.

Il a été proposé de développer des équipements de protection auxiliaire de type analogique dans lesquels l'énergie de fonctionnement est prélevé sur le courant de défaut lorsque la batterie du poste est défaillante.

Cette solution peut fonctionner, dans le cas de protection de ligne triphasées avec neutre à la terre, lorsque le défaut est franc, donc engendre un courant de défaut important. Le système devient inopérant dans le cas de défaut résistant (exemple d'une ligne tombant sur un sol granitique) car le courant de défaut est alors de l'ordre de l'ampère et insuffisant pour alimenter le système de protection.

On a alors songé à réaliser des équipements de protection électroniques de type numériques ne nécessitant qu'une faible énergie de fonctionnement et de veille, alimentés par une pile longue durée.

Cette solution n'est pas parfaite car elle oblige encore à un remplacement périodique des piles, ce qui représente une charge d'exploitation.

Un but de la présente invention est de réaliser un dispositif d'alimentation pour équipements de protection numérique ou analogique qui ne nécessite aucune source auxiliaire et qui néanmoins fonctionne pour tous les types de défauts envisageables, malgré la défaillance éventuelle de la batterie du poste.

L'invention a pour objet un dispositif pour l'alimentation électrique d'un poste de protection d'une ligne triphasée à neutre à la terre par une résistance, caractérisé en ce qu'il comprend, en série entre l'une des phases et la terre, un condensateur et le primaire d'un transformateur de courant ayant un secondaire, ledit secondaire étant, connecté à une alimentation à découpage.

L'invention a également pour objet un dispositif pour l'alimentation électrique d'un poste de protection d'une ligne électrique triphasée à neutre compensé par une bobine de Petersen, caractérisé en ce qu'il comprend, pour chaque phase, un circuit comprenant, en série entre la phase et la terre, un premier condensateur un enroulement primaire d'un transformateur de courant ayant un secondaire et un second condensateur, des moyens pour élaborer les valeurs des courants et tensions homopolaires de la ligne, lesdits secondaires alimentant une alimentation à découpage.

Les différents objets et caractéristiques de l'invention apparaîtront de façon plus détaillée dans la description qui va suivre d'un exemple de réalisation de l'invention, donnée en se référant au dessin dans lequel :

- la figure 1 est un schéma électrique d'un dispositif d'alimentation selon un premier mode de réalisation et utilisable avec une ligne avec neutre à la terre.

- la figure 2 est un schéma électrique d'un dispositif d'alimentation selon une variante de réalisation, utilisable avec une ligne avec neutre compensé.

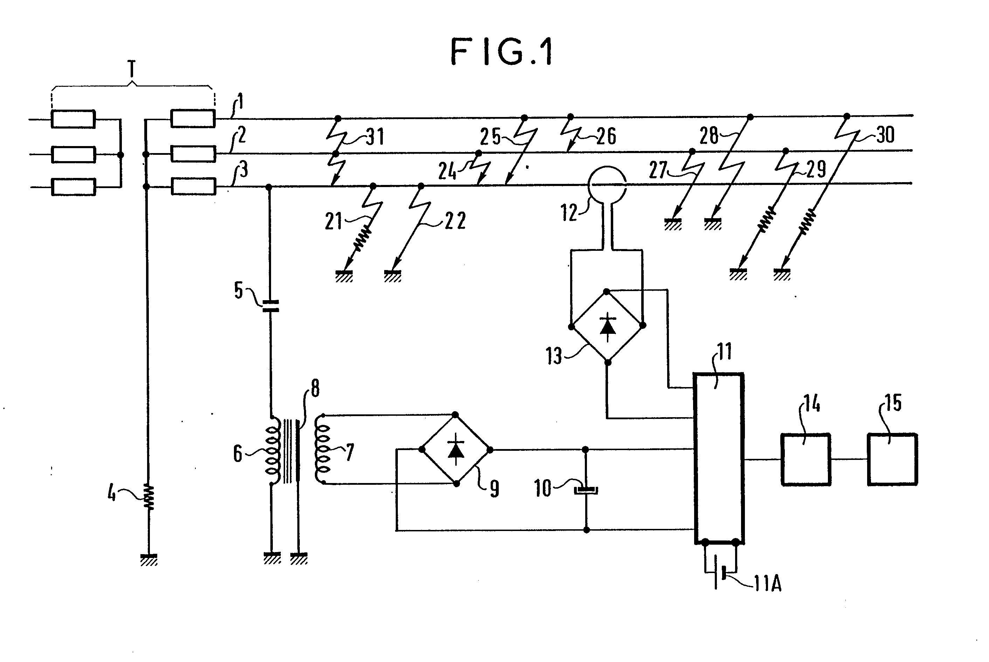

Dans la figure 1, les références 1, 2 et 3 désignent les trois phases d'une ligne électrique triphasée issues d'un transformateur moyenne tension-haute tension T.

Le neutre de la ligne est mis à la terre par une résistance 4.

L'alimentation selon l'invention comprend un condensateur 5, dont une première borne est reliée à l'une des phases de la ligne (ici la phase 3). Le condensateur est par ailleurs connecté à un enroulement primaire 6 d'un transformateur de courant.

L'enroulement 6 est mis à la terre.

Un enroulement secondaire 7 du transformateur de courant, qui possède un écran 8 à la terre, est relié à une première diagonale d'un pont redresseur 9. La seconde diagonale du pont redresseur est reliée à un organe de filtrage 10 et à un circuit 11 ayant la fonction d'un circuit OU analogique. Ce circuit reçoit également un signal fourni par un tore 12, disposé sur la même phase 3 de la ligne, et suivi d'un pont de redressement 13, et la tension de la batterie du poste lorsqu'elle est disponible.

En sortie du circuit OU est connectée une alimentation à découpage 14 qui alimente l'équipement de protection numérique figuré par le rectangle 15.

Le condensateur 5 est choisi de manière à obtenir au secondaire du transformateur une puissance nécessaire et suffisante pour alimenter l'alimentation à découpage.

Typiquement, pour une ligne triphasée ayant une tension de 20 kV, un condensateur de 3000 picofarads assurera au primaire du transformateur par un courant de 10 milliampères.

En choisissant l'enroulement primaire pour obtenir 400 volts à ses bornes, on pourra obtenir une puissance de 4 watts au secondaire, ce qui sera suffisant pour les besoins de l'alimentation du système numérique de protection via l'alimention. Un condensateur de plus grande capacité fournirait une puissance supérieure mais serait d'un prix élevé. En, pratiqué, on ne dépassera pas 5000 pF.

En cas de défaut 21 résistant à la terre sur la phase munie du circuit de l'invention, l'énergie du condensateur suffira à assurer l'alimentation des circuits de protection, car un tel défaut n'affecte pas les tensions phases/terre.

Dans le cas d'autres défauts, (court-circuit 22 entre la phase munie du circuit de l'invention et la terre, court-circuit 24, 25 entre cette phase et l'une des deux autres phases, court-circuit entre les deux autres phases, court-circuit 27, 28 entre l'une des deux autres phases et la terre, défaut résistant 29, 30 entre l'une des deux autres phases et la terre, court-circuit triphasé 31), c'est le tore 12 qui assurera l'énergie des circuits de protection.

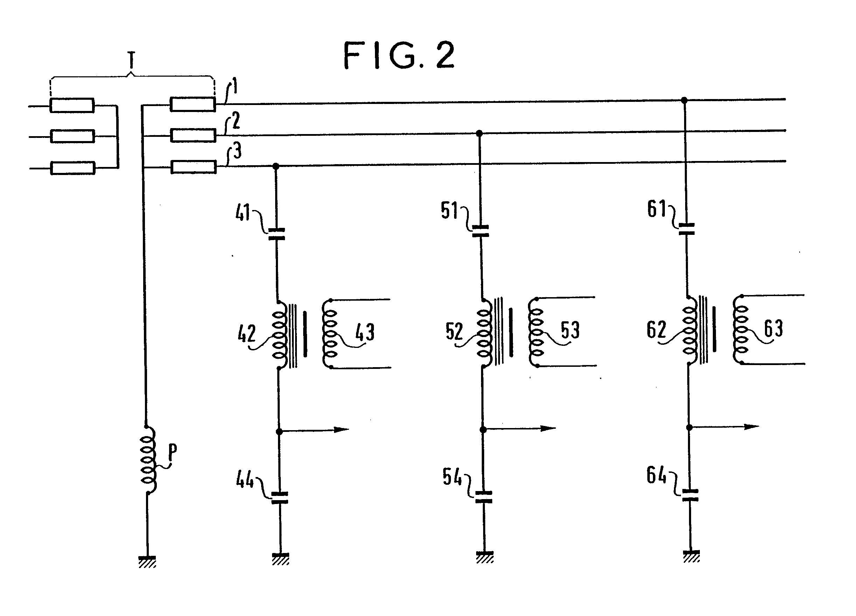

Dans le cas d'une ligne à neutre compensé, par exemple au moyen d'une bobine de Petersen, P, (figure 2), il est nécessaire de mesurer les tensions des phases.

On placera sur chacune des phases un circuit conforme à l'invention et complété par un condensateur en série. On obtiendra ainsi un diviseur de tension qui permettra les mesures des tensions de phase.

La figure 2 montre ainsi chaque phase équipée d'un premier condensateur 41, 51, 61 en série avec le primaire 42, 52, 62 d'un transformateur de courant ayant un secondaire 43, 53, 63, suivi d'un second condensateur 44, 54, 64.

Disposant ainsi d'une image de toutes les tensions de phases et de tous les courants de phase, il est possible de calculer les valeurs homopolaires de la ligne. Les circuits classiques pour réaliser ces calculs ainsi que l'alimentation à découpage n'ont pas été représentés dans la figure 2.

L'invention n'est pas limitée au mode de réalisation décrit et représenté qui n'a été donné qu'à titre d'exemple.

## Revendications

1/ Dispositif pour l'alimentation électrique d'un poste de protection d'une ligne triphasée à neutre à la terre par une résistance, caractérisé en ce qu'il comprend, en série entre l'une (3) des phases et la terre, un condensateur (5) et le primaire (6) d'un transformateur de courant ayant un secondaire (7), ledit secondaire étant, connecté à une alimentation à découpage (14).

2/ Dispositif selon la revendication 1, caractérisé en ce que la capacité dudit condensateur (5) ne dépasse pas 5000 picofarads.

3/ Dispositif selon l'une des revendications 1 et 2, caractérisé en ce qu'un tore (12) de mesure de courant est placé sur ladite phase (3) et relié, ainsi que la sortie dudit transformateur (6, 7) de courant par un circuit de type OU (11) à ladite alimentation à découpage, ledit circuit étant alimenté par une batterie (11A) du poste, lorsqu' elle est disponible.

4/ Dispositif pour l'alimentation électrique d'un circuit de protection d'une ligne électrique triphasée à neutre compensé par une bobine de Petersen (P), caractérisé en ce qu'il comprend, pour chaque phase, un circuit comprenant, en série entre la phase et la terre, un premier condensateur (41, 51, 61), un enroulement primaire (42, 52, 62) d'un transformateur de courant ayant un secondaire (43, 53, 63) et un second condensateur (44, 54, 64), des moyens pour élaborer les valeurs des courants et tensions homopolaires de la ligne, lesdits secondaires alimentant une alimentation à découpage.

FIG.1

# FIG. 2

EP 0 366 063 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | US-A-3780349 (FUJI DENKI SEIZO)<br>* colonne 3, lignes 28 - 58 *<br>--- | 1-4 | H02H1/06 |
| Y | US-A-4352138 (MC-GRAW-EDISON)<br>* colonne 2, ligne 48 - colonne 5, ligne 9 *<br>--- | 1-4 | |
| A | US-A-3411039 (ALLIS-CHLALMERS)<br>* colonne 5, ligne 65 - colonne 6, ligne 64 *<br>--- | 1-4 | |
| A | US-A-3048745 (THE ENGLISH ELECTRIC COMPANY)<br>* colonne 5, lignes 22 - 70 *<br>----- | 1-4 | |

DOMAINES TECHNIQUES RECHERCHES (Int. Cl.5 )

H02H

Le présent rapport a été établi pour toutes les revendications

| Lieu de la recherche | Date d'achèvement de la recherche | Examinateur |
|---|---|---|
| LA HAYE | 30 JANVIER 1990 | LIBBERECHT L.A. |

EPO FORM 1503 03.82 (P0402)